# EUROPEAN PATENT SPECIFICATION

(11) **EP 2 866 461 B1**
(45) Date of publication and mention of the grant of the patent: **12.09.2018**
(21) Application number: 14189990.6
(22) Date of filing: 23.10.2014
(51) Int. Cl.: H04Q 9/04

(54) **SIGNAL COLLECTING APPARATUS, PERIODIC SIGNAL TRANSMITTING APPARATUS AND SIGNAL COLLECTING SYSTEM**
SIGNALERFASSUNGSVORRICHTUNG, PERIODISCHE SIGNALÜBERTRAGUNGSVORRICHTUNG UND SIGNALERFASSUNGSSYSTEM
APPAREIL DE RECUEIL DE SIGNAL, APPAREIL DE TRANSMISSION D'UN SIGNAL PÉRIODIQUE ET SYSTÈME DE COLLECTE DE SIGNAL

(30) Priority: 24.10.2013 JP 2013220794; 24.10.2013 JP 2013220795
(43) Date of publication of application: 29.04.2015
(73) Proprietor: Panasonic Intellectual Property Management Co., Ltd., Osaka-shi, Osaka 540-6207 (JP)
(72) Inventor: Yamamoto, Masahiro, Osaka-shi, Osaka 540-6207 (JP); Yamashita, Masumi, Osaka-shi, Osaka 540-6207 (JP); Horiike, Yoshio, Osaka-shi, Osaka 540-6207 (JP)
(74) Representative: Schwabe - Sandmair - Marx

(56) References cited:
- US-A- 6 111 872

## Description

### BACKGROUND OF THE INVENTION

### 1. Field of the Invention

The present invention relates to a signal collecting apparatus that collects meter reading data from a meter through wireless communication, a periodic signal transmitting apparatus that transmits the meter reading data through wireless communication, and a signal collecting system including the signal collecting apparatus and the periodic signal transmitting apparatus.

### 2. Description of the Related Art

There is a signal collecting system that transmits meter reading data on gas or the like collected by a smart meter provided in a house to a data management center of a gas company or the like. In such a system, wireless communication between a wireless slave device (periodic signal transmitting apparatus) built in the smart meter and a wireless master device (signal collecting apparatus) provided on an electric pole, the rooftop of a building or the like has been studied. In particular, an open metering system (OMS) protocol that operates on a wireless M-bus network has been studied mainly in Europe. Further, the wireless master device and the data management center of the gas company or the like are connected to each other through a public network such as the Internet.

In the OMS protocol, a method in which the wireless slave device periodically transmits meter reading data to the wireless master device is used. According to this method, the wireless slave device turns on power of a wireless unit to periodically transmit the meter reading data, for example, every 6 hours, and then waits for data reception from the wireless master device. Thus, the wireless slave device turns off the power of the wireless unit after communication is finished, and enters a standby state. According to this system, since only short-time communication is performed once during six hours, power consumption can be reduced, to thereby provide an operation over ten years using a battery. On the other hand, when any data is to be transmitted from the wireless master device to the wireless slave device, a method in which the wireless master device waits until the wireless slave device transmits the meter reading data next time and transmits the data immediately after receiving the meter reading data from the wireless slave device is employed.

In a 1:N system in which plural wireless slave devices are connected to one wireless master device, if the time when the plural wireless slave devices transmit the meter reading data is not integrally managed, a case where the plural wireless slave devices transmit the meter reading data almost at the same time and cause collision of radio waves may occur. Thus, a method for synchronizing timepieces of all the wireless slave devices with a timepiece of the wireless master device and transmitting meter reading data from the plural wireless slave devices at a predetermined interval in a predetermined order may be considered.

For example, Japanese Patent Unexamined Publication No. 2006-343979 discloses a technique in which a wireless master device transmits a synchronization signal, all wireless slave devices synchronize timepieces thereof with the synchronization signal, and then, each of the plural wireless slave devices sequentially transmits data at time interval Tc in a predetermined order after reception of the synchronization signal. More specifically, a wireless slave device DO transmits data immediately after receiving the synchronization signal, a wireless slave device D1 transmits the data after time interval Tc, and the wireless slave device Dn transmits the data after time interval (Tc×n).

In this way, by synchronizing the timepiece of the wireless master device and the timepieces of the wireless slave devices to shift data calling timings of the plural wireless slave devices for each wireless slave device, it is possible to prevent collision of the data transmitted by the respective wireless slave devices. Further, by determining time interval Tc in consideration of the length of the meter reading data transmitted by the wireless slave devices and the length of data transmitted by the wireless master device, it is possible to perform transmission of the data from the wireless master device during time interval Tc.

However, in the method disclosed in Japanese Patent Unexamined Publication No. 2006-343979, in consideration of transmission of a large amount of data from the wireless master device, time interval Tc should be lengthened. Since the relationship between time Ts necessary for transmission of meter reading data by all the wireless slave devices and a maximum number N of the wireless slave devices capable of being accommodated by the wireless master device is N<(Ts/Tc), if time interval Tc is lengthened, the number N of the wireless slave devices capable of being accommodated becomes small, which is problematic.

In many cases, the large amount of data transmitted from the wireless master device is data common to the respective wireless slave devices, such as firmware rewriting data of the wireless slave devices. Accordingly, in consideration of broadcasting, a method in which a transmission exclusive zone (time) for a signal from the wireless master device is provided after a transmission timing of the meter reading data of the N-th final wireless slave device elapses without lengthening time interval Tc may be considered. However, in this case, since the transmission exclusive zone is provided, the number of the wireless slave devices capable of being accommodated is reduced, which is problematic.

Further, the intermittent reception method is disclosed in Japanese Patent Unexamined Publication No.2013-078009.
US-6,111,872 A relates to a telemeter telecontrol system. A master station performing continuous operations is communicatively coupled with a plurality of remote stations performing intermittent transmission/receiving operations in constant cycles. Control units of the remote stations control radio communication devices to transmit synchronizing signals to the master station in constant cycles respectively. When the synchronizing signals are received from the remote stations, a control unit of the master station acquires information of corresponding intermittent receiving timing from a memory device, and controls a radio communication device to perform transmitting operations to the remote stations in coincidence with the intermittent receiving timing. Further, the control unit of the master station reads random number values from a random number generator in re-transmission of data, and shifts data transmission timing from original timing by time corresponding to the random number values. On the other hand, the control units of the remote stations read random number values from random number generators in re-receiving of the data, and shift data receiving timing from original timing by time corresponding to the random number values. Thus, the data collision probability is reduced.

### SUMMARY OF THE INVENTION

The invention is made in consideration of the problems of the related arts and provides a signal collecting apparatus, a periodic signal transmitting apparatus, and a signal collecting system in which a wireless slave device can receive a large amount of data from a wireless master device, without noticeable reduction of the number of the wireless slave devices capable of being accommodated, and without lengthening a calling interval of meter reading data.

According to an aspect of the invention, there is provided a signal collecting apparatus that performs wireless communication with a periodic signal transmitting apparatus to which a predetermined period including a period for transmission and reception of a periodic signal that is periodically generated and a period for transmission and reception of a non-periodic signal that is non-periodically generated is repeatedly allocated. The signal collecting apparatus includes a receiving unit that receives the periodic signal from the periodic signal transmitting apparatus in the period for transmission and reception of the periodic signal, and a transmitting unit that transmits, when the non-periodic signal is transmitted to the periodic signal transmitting apparatus, time point information to the periodic signal transmitting apparatus to which the periodic signal is transmitted. Further, a point of time indicated by the time point information is present within a range of the period for transmission and reception of the non-periodic signal.

Further, according to another aspect of the invention, there is provided a periodic signal transmitting apparatus to which a predetermined period including a period for transmission and reception of a periodic signal that is periodically generated and a period for transmission and reception of a non-periodic signal that is non-periodically generated is repeatedly allocated. The periodic signal transmitting apparatus includes a transmitting unit that transmits the periodic signal to a signal collecting apparatus in the period for transmission and reception of the periodic signal, and a receiving unit that receives, immediately after the periodic signal is transmitted, time point information from the signal collecting apparatus in which the periodic signal is received. Further, a point of time indicated by the time point information is present within a range of the period for transmission and reception of the non-periodic signal.

Further, according to still another aspect of the invention, there is provided a signal collecting system including the above-described signal collecting apparatus and the above-described periodic signal transmitting apparatus.

With such a configuration, the wireless slave device can receive the large amount of data from the wireless master device without noticeable influence on the number of wireless slave devices capable of being accommodated in the signal collecting system, and on the meter reading data transmission interval of the wireless slave devices.

Further, by using the periodic signal transmitting apparatus and the signal collecting system according to the invention, in a wireless communication system such as an automatic gas meter reading system, the large amount of data such as firmware can be broadcast to the respective wireless slave devices by the wireless master device at the same time, without noticeable influence on the number of the wireless slave devices capable of being accommodated and the meter reading data transmission interval of the wireless slave devices.

### BRIEF DESCRIPTION OF THE DRAWINGS

FIG. 1 is a block diagram illustrating an example of a configuration of a periodic notification apparatus according to an embodiment of the invention;
FIG. 2 is a diagram illustrating a configuration of a signal collecting apparatus that is a wireless master device according to an embodiment of the invention;
FIG. 3 is a diagram illustrating a data frame configuration based on an OMS protocol transmitted from a wireless master device, according to an embodiment of the invention;
FIG. 4 is a diagram illustrating a configuration of a periodic meter reading data communication zone and a broadcast communication zone, according to an embodiment of the invention;
FIG. 5 is a diagram illustrating a periodic meter reading data call origination sequence from a wireless slave device to a wireless master device based on an OMS protocol, according to an embodiment of the invention;
FIG. 6 is a diagram illustrating a communication sequence in zone D shown in Fig. 4, according to an embodiment of the invention; and
FIG. 7 is a diagram illustrating a receiving operation at reception timing B of zone D of wireless slave devices M1 to Mn, that is, at point of time Ta, according to an embodiment of the invention.

### DETAILED DESCRIPTION OF PREFERRED EMBODIMENTS

Hereinafter, embodiments of the invention will be described with reference to the accompanying drawings. The invention is not limited by the embodiments.

First, an embodiment of the invention will be described.

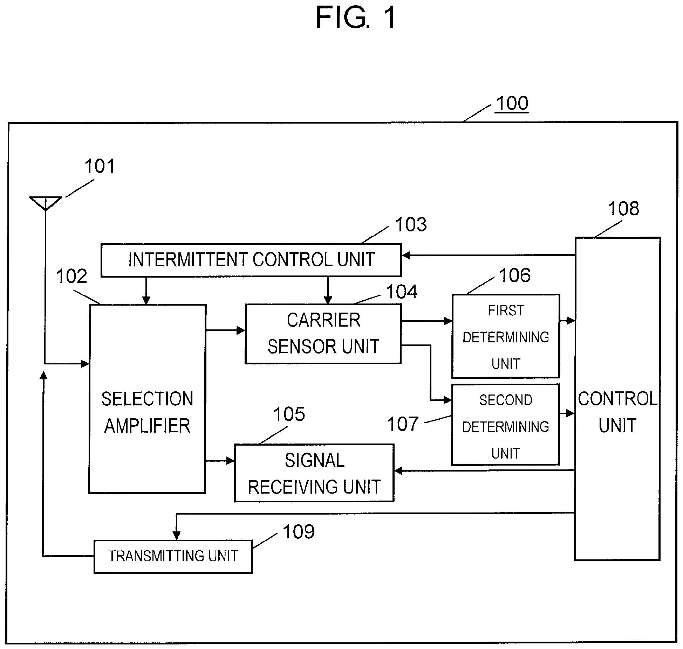

Fig. 1 is a block diagram illustrating an example of a configuration of periodic notification apparatus 100 according to an embodiment of the invention.

First, an outline of the configuration and an operation of periodic notification apparatus 100 that is a wireless slave device (periodic signal transmitting apparatus) will be described.

Periodic notification apparatus 100 includes antenna 101, selection amplifier 102, intermittent control unit 103, carrier sensor unit 104, signal receiving unit 105, first determining unit 106, second determining unit 107, control unit 108, and transmitting unit 109.

First, an outline of a periodic signal transmission operation will be described. As described later in detail, control unit 108 turns on power of transmitting unit 109 at predetermined interval Ts. If the power is turned on by control unit 108 (ON), transmitting unit 109 transmits meter reading data (periodic signal) as a radio wave through antenna 101. Further, if the transmission of the meter reading data is finished, control unit 108 turns off the power of transmitting unit 109 (OFF), operates signal receiving unit 105 for a predetermined time, and confirms whether a signal to be received through antenna 101 is present.

Next, an outline of a broadcast reception operation will be described. In selection amplifier 102, a signal of a desired frequency is selected from the signal input to antenna 101 and then is amplified. Control unit 108 is involved in an entire control of periodic notification apparatus 100 shown in Fig. 1, and starts intermittent control unit 103 at a predetermined point of time.

If intermittent control unit 103 is started, intermittent control unit 103 performs an on-off control of power of carrier sensor unit 104 and selection amplifier 102 at a predetermined interval. That is, intermittent control unit 103 causes carrier sensor unit 104 to intermittently perform a carrier sensing operation at the predetermined interval. First determining unit 106 is started by control unit 108, and determines whether a carrier is detected or not in carrier sensor unit 104. If it is determined that the carrier is detected, first determining unit 106 notifies control unit 108 of carrier detection information.

Second determining unit 107 is started by control unit 108, and determines whether the carrier detection is absent in carrier sensor unit 104. If it is determined that the carrier detection is absent, second determining unit 107 notifies control unit 108 of carrier non-detection information. Control unit 108 starts signal receiving unit 105 based on the carrier detection information from first determining unit 106 and the carrier non-detection information from second determining unit 107, to perform a signal receiving and decoding operation.

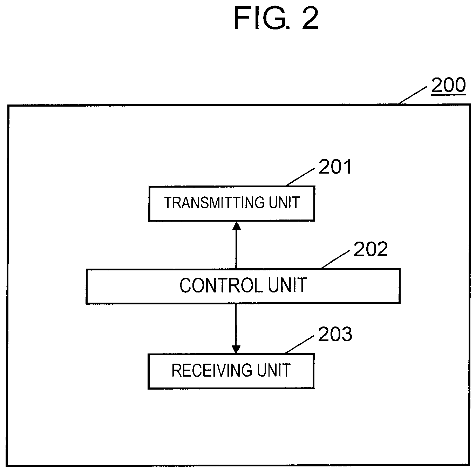

Fig. 2 is a diagram illustrating a configuration of signal collecting apparatus 200 that is a wireless master device according to an embodiment of the invention.

Signal collecting apparatus 200 includes transmitting unit 201, receiving unit 203, and control unit 202 that controls transmitting unit 201 and receiving unit 203.

Signal collecting apparatus 200 and one or plural periodic notification apparatuses 100 form a signal collecting system.

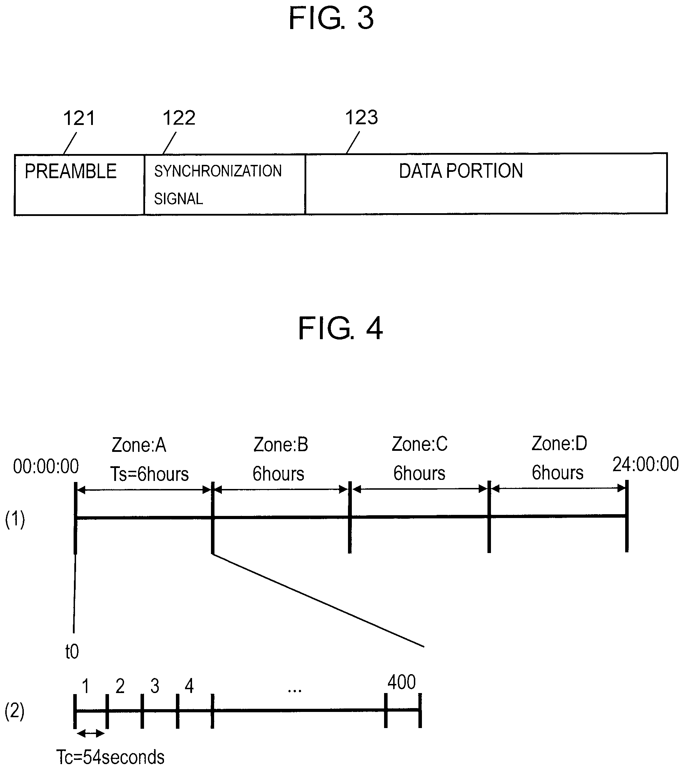

Fig. 3 is a diagram illustrating a data frame configuration based on an OMS protocol transmitted from a wireless master device, according to an embodiment of the invention.

Preamble 121 is configured by a bit string of 16 bits in which "0" and "1" are repeated. Synchronization signal 122 is a bit string that is formed of 16 bits and is used for identification of a head of data portion 123 transmitted subsequently to synchronization signal 122.

Data portion 123 is a bit string formed of communication control information such as a transmission source address or a transmission destination address, and application data. In the OMS protocol, a maximum of 2048 bits of data portion 123 can be transmitted. Preamble 121 is used for creating a data sampling timing for identifying which one of "1" and "0" a reception signal corresponds to.

Fig. 4 is a diagram illustrating a configuration of a periodic meter reading data communication zone and a broadcast communication zone, according to an embodiment of the invention.

One day (24 hours) is equally divided into four zones, that is, A, B, C, and D with interval Ts (=6 hours) ((1) in Fig. 4). Each zone is equally divided by n with time interval Tc, and each of the equally divided n time intervals Tc is allocated as a zone (time) in which each wireless slave device calls the periodic meter reading data. In an example of (2) in Fig. 4, interval Ts (=6 hours) that is one of the equally divided four zones is further divided into 400 zones with time interval Tc (=54 seconds).

In the example of (2) in Fig. 4, initial time interval Tc1 represents a calling zone of a first wireless slave device, the next time interval Tc2 represents a calling zone of a second wireless slave device, and time interval Tc3 represents a calling zone of a third wireless slave device, and in this way, each zone Tcn is allocated to a calling zone of each wireless slave device n. In the example of Fig. 4, the calling zones may be allocated to 400 wireless slave devices. Further, each wireless slave device transmits the periodic meter reading data to the wireless master device in a wireless manner in the corresponding calling zone.

In the example of Fig. 4, each wireless slave device calls a periodic signal in the corresponding calling zone of each zone of A, B, C, and D. Thus, one wireless slave device transmits the periodic meter reading data to the wireless master device four times a day. However, practically, since it is not necessary to transmit the periodic meter reading data four times a day, the wireless slave device is configured to transmit the periodic meter reading data three times a day without one-time transmission in the next zone.

That is, in zones A, B, and C, each wireless slave device calls the periodic meter reading data, but in zone D, the wireless slave device does not transmit the periodic meter reading data. Further, zone D where the wireless slave device does not call the periodic meter reading data is used as a zone where the wireless master device performs large data transmission (non-periodic signal). As the large amount of data transmitted from the wireless master device, for example, the above-described rewriting data of firmware of wireless slave device, or the like may be used.

As described above, each wireless slave device is configured to perform the calling for transmission of the periodic meter reading data plural times and to rest at the next calling timing. Thus, a periodic meter reading calling rest period (in an example of Fig. 4, zone D with interval Ts) of a predetermined certain length can be secured, and thus, in zone D that is the rest period, wireless master device can transmit the large amount of data. The firmware rewriting data is as large as 500 kilobytes, for example. On the other hand, in a case where an M-bus network is used, a transmission speed is a low speed of about 2400 bps. Thus, even using continuous transmission, it takes about one hour to transmit the data of 500 kilobytes. Accordingly, a certain time zone as indicated by zone D is necessary.

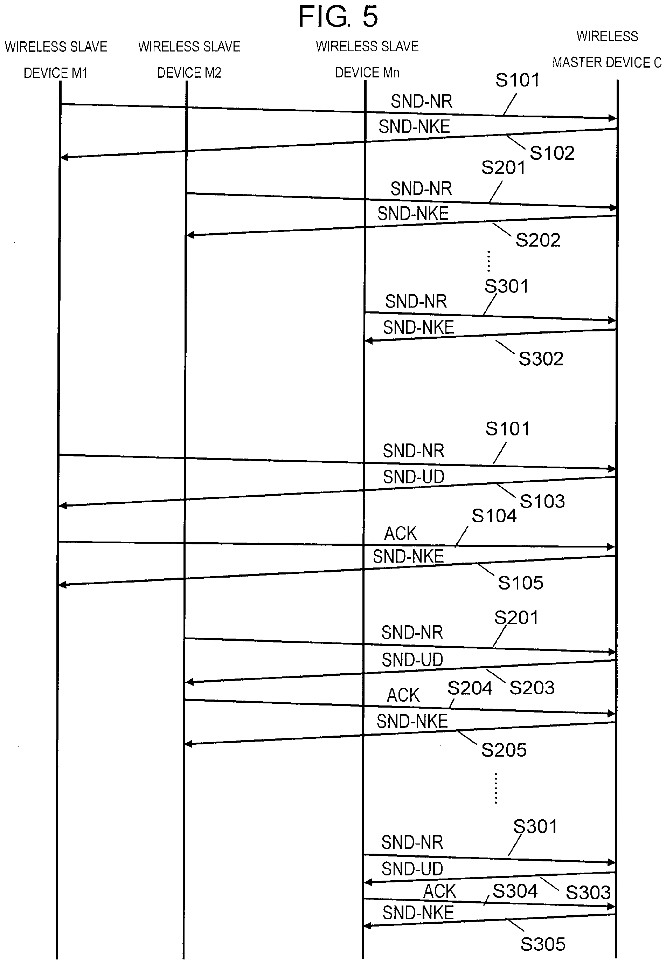

Next, a communication sequence in which the wireless slave device calls the periodic meter reading data will be described with reference to Fig. 5.

Fig. 5 is a diagram illustrating a periodic meter reading data calling sequence from a wireless slave device to a wireless master device based on an OMS protocol, according to an embodiment of the invention.

Fig. 5 shows first wireless slave device M1, second wireless slave device M2, n-th wireless slave device Mn, and wireless master device C. First wireless slave device M1 transmits a telegram of SND-NR to wireless master device C at the head of time interval (zone) Tc1 in zone A shown in Fig. 4 (S101). The SND-NR telegram includes the periodic meter reading data.

If there is no data to be transmitted to wireless slave device M1 that transmits the periodic meter reading data, wireless master device C that receives the SND-NR telegram transmits SND-NKE that is a link cutoff request through transmitting unit 201, and finishes the communication (S102).

Then, wireless slave device M2 transmits the SND-NR telegram to wireless master device C at the head of time interval (zone) Tc2 in zone A shown in Fig. 4 (S201). The SND-NR telegram includes the periodic meter reading data. If there is no data to be transmitted to wireless slave device M2 that transmits the periodic meter reading data, wireless master device C that receives the SND-NR telegram transmits SND-NKE that is a link cutoff request through transmitting unit 201, and finishes the communication (S202).

Wireless slave device Mn transmits the SND-NR telegram to wireless master device C at the head of time interval (zone) Ten in zone A shown in Fig. 4 (S301). The SND-NR telegram includes the periodic meter reading data. If there is no data to be transmitted to wireless slave device Mn that transmits the periodic meter reading data, wireless master device C that receives the SND-NR telegram transmits SND-NKE that is a link cutoff request through transmitting unit 201, and finishes the communication (S302).

Similarly, in zones B and C, each wireless slave device performs the same operation as that in zone A. Further, in zone D, all the wireless slave devices stop the transmission of the SND-NR telegram. That is, if the SNR-NR telegram is transmitted three times at time interval Ts, each wireless slave device stops the transmission of the SND-NR telegram at transmission timing A that is the next time interval Ts.

On the other hand, if there is data to be transmitted to first wireless slave device M1 that transmits the periodic meter reading data, wireless master device C transmits an SND-UD telegram through transmitting unit 201 (S103). Further, first wireless slave device M1 that receives the SND-UD telegram transmits an ACK telegram (S104), and then, wireless master device C transmits SND-NKE that is a link cutoff request to finish the communication (S105). The same processes are performed between wireless master device C and second wireless slave device M2, and between wireless master device C and n-th wireless slave device Mn (S201 to S305).

When wireless master device C wants to rewrite the firmware of each wireless slave device, about one hour is necessary for transmission of the firmware data. For this reason, it is not possible, in view of time, to transmit firmware data in the SND-UD telegram after SND-NR transmitted at the periodic meter data reading data calling timing of first wireless slave device M1 shown in Fig. 5. The time length of the periodic meter reading data calling timing of wireless slave device M1 is only 54 seconds, as shown in (2) in Fig. 4. Accordingly, if the firmware data is transmitted in this time zone, since the next second wireless slave device M2 calls the periodic meter reading data, the transmission of the firmware data from wireless master device C collides with the periodic meter data from second wireless slave device M2, which causes instability of the system.

Accordingly, when wireless master device C wants to rewrite the firmware of each wireless slave device, wireless master device C carries information on point of time Ta in the SND-UD telegram (S103, S203, and S303) transmitted after the periodic meter reading data calling SND-NR to start reception at predetermined reception timing B in the range of zone D, with respect to each wireless slave device.

In this way, in the present embodiment, wireless master device C instructs each wireless slave device to start reception at predetermined timing B of zone D using the SND-UD telegram (S103, S203, and S303) after the SND-NR telegram (S101, S201, and S301) in which the periodic meter reading data from each wireless slave device, transmitted in zone A, B or C, is carried. Information indicating an elapsed time until the reception is started may be used instead of the information on point of time Ta.

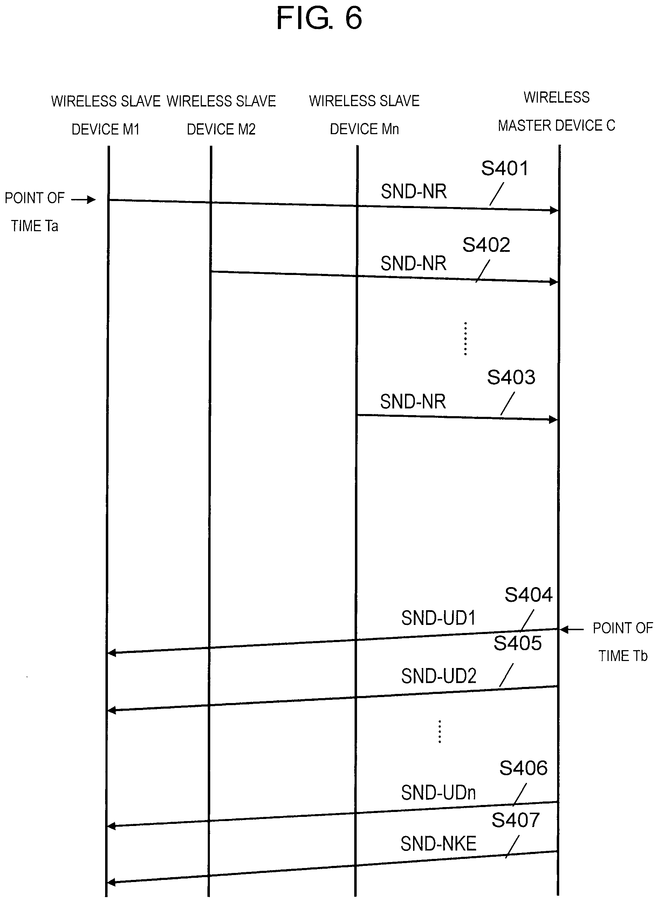

Fig. 6 is a diagram illustrating a communication sequence in zone D shown in Fig. 4, according to an embodiment of the invention.

At point of time Ta that is reception timing B instructed by wireless master device C, each wireless slave device transmits SND-NR, and then enters a reception state (S401, S402, and S403). A synchronization signal that is periodically transmitted from the wireless master device, as disclosed in Japanese Patent Unexamined Publication No. 2006-343979, is not present in the OMS protocol.

Timepiece synchronization between the wireless master device and the wireless slave device is performed as follows. The wireless master device receives time point information of the wireless slave device, included in the SND-NR telegram. Control unit 202 of wireless master device checks a difference between the time point information of the wireless slave device and the timepiece of the wireless master device. If a timepiece difference of a predetermined value or greater occurs, control unit 202 of the wireless master device transmits correct time point information to the wireless slave device that is a target using the SND-UD telegram.

The timepiece synchronization between the wireless slave device and the wireless master device is not performed until the predetermined timepiece difference occurs so that the timepiece information is not frequently communicated. For this reason, in the OMS protocol, the timepieces of wireless master device C and each of wireless slave devices M1 to Mn do not exactly match, and a difference of about ±5 seconds occurs.

For example, in the example shown in Fig. 6, it is assumed that the progress of the timepieces is in the order of first wireless slave device M1, second wireless slave device M2, and n-th wireless slave device Mn, that is, the timepiece of first wireless slave device M1 is fastest. Here, wireless master device C transmits SND-UD1 in which the firmware rewriting data is carried at point of time Tb (S404).

Point of time Tb is set as a point of time slower than point of time Ta by 10 seconds, in consideration of the maximum timepiece difference of wireless master device C and respective wireless slave devices M1 to Mn. Accordingly, at point of time Tb, all the wireless slave devices to which the reception is instructed enter the reception state. The telegram such as SND-NR and SND-UD has the frame configuration shown in Fig. 3, and the periodic meter reading data and the firmware rewriting data are carried in data portion 123.

In the OMS protocol, data portion 123 is formed of 2048 bits at the maximum. On the other hand, the firmware rewriting data has a large size of 500 kilobytes. Accordingly, it is not possible to transmit the entire firmware rewriting data by only using SND-UD1. Accordingly, the firmware rewriting data is divided into a small size of data of 2048 bits or smaller. Thus, as shown in Fig. 6, the firmware rewriting data is divided into plural telegrams of SND-UD1, SND-UD2, ..., and SND-UDn for transmission (S404 to S406).

Then, wireless master device C finally transmits link cutoff request SND-NKE, and finishes the communication (S407). The telegrams of SND-UD1 to SND-UDn, and SND-NKE transmitted by wireless master device C are received by all wireless slave devices M1 to Mn in the reception state.

In the example of Fig. 6, wireless slave devices M1 to Mn transmit SND-NR before entering the reception state. This is based on the OMS protocol. If a transmission frequency of wireless slave devices M1 to Mn and a transmission frequency of wireless master device C, that is, a reception frequency of wireless slave devices M1 to Mn are different from each other, there is no problem, but if the transmission frequency and the reception frequency are the same, a case where SND-NR transmitted by second wireless slave device M2 is carrier-detected in first wireless slave device M1 that is already in the reception state may be considered.

Accordingly, when the transmission frequency of wireless slave devices M1 to Mn and the reception frequency thereof are the same, a configuration in which each of wireless slave devices M1 to Mn is considered to transmit SND-NR without transmitting SND-NR in practice to enter the reception state may be used. With such a configuration, SND-NR transmitted by another wireless slave device is prevented from being mistakenly carrier-detected as a signal from wireless master device C.

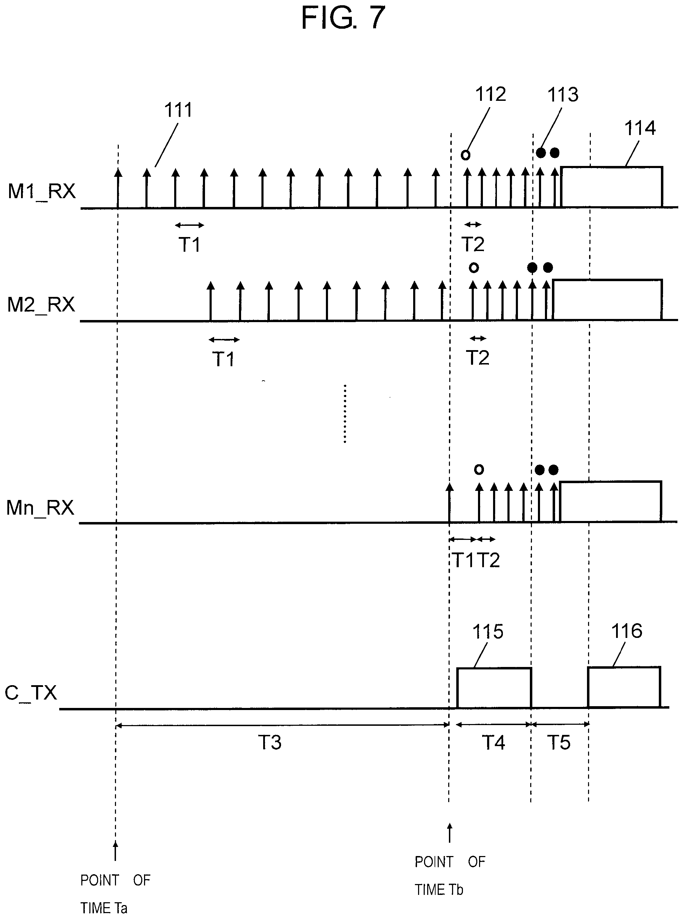

Fig. 7 is a diagram illustrating a receiving operation at reception timing B of zone D of wireless slave devices M1 to Mn, that is, at point of time Ta.

In Fig. 7, a receiving operation of first wireless slave device M1 is shown in M1_RX, and a receiving operation of second wireless slave device M2 is shown in M2_RX, and a receiving operation of n-th wireless slave device Mn is shown in Mn_RX respectively.

At point of time Ta, first wireless slave device M1 is considered to transmit SND-NR and enters the reception state. Further, second wireless slave device M2 enters the reception state later than point of time Ta, and n-th wireless slave device Mn enters the reception state later than point of time Ta by T3.

When the maximum timepiece difference between wireless master device C and wireless slave devices M1 to Mn is ±5 seconds, if T3 is set to 10 seconds or longer, it can be considered that all the wireless slave devices at point of time Tb is in the reception state.

Fig. 7 shows a carrier sensing operation 111. That is, wireless slave devices M1 to Mn repeatedly perform carrier sensing operation 111 at time interval T1 after starting the reception operation.

A transmitting operation of wireless master device C is shown in C_TX. Wireless master device C transmits SND-UD1 signal 115 shown in Fig. 6 at point of time Tb. The signal length of SND-UD1 signal 115 corresponds to T4. If the firmware rewriting data has 500 kilobytes and is divided every 200 bytes, the data of 500 kilobytes is divided into 2500 blocks. Further, when one block, (200 bytes, that is, 1600 bits) is carried on one SND-UD, if the length of SND-UD including control information is set to 2048 bits, a transmission speed becomes 2400 bps, and thus, T4 becomes about 853 milliseconds. Then, after transmission rest time T5 elapses, wireless master device C transmits SND-UD2 signal 116 in which the next block information is carried.

Thereafter, similarly, SND-UDn is sequentially transmitted from wireless master device C with rest time T5. Rest time T5 is 100 milliseconds or longer. Here, if T1 is set to 400 milliseconds, wireless slave devices M1 to Mn can perform the carrier sensing operation two times during time T4 when SND-UD1 signal 115 is transmitted.

In Fig. 7, in carrier sensing operation 111 at a carrier sensing timing 112 indicated by a white circle, the wireless slave devices can detect a carrier of SND-UD1 signal 115. When the carrier is detected at carrier sensing timing 112, wireless slave devices M1 to Mn change a carrier sensing interval from T1 to T2 to perform the carrier sensing operation at time interval T2 shorter than transmission rest time T5. If transmission rest time T5 is set to 100 milliseconds, T2 is set to 20 milliseconds, for example.

A carrier sensing timing 113 indicated by a black circle represents a timing of a carrier sensing operation performed at the timing of transmission rest time T5, in which the carrier is not detected. In the case of Fig. 7, when it is determined that the carrier is not detected two times in succession, wireless slave devices M1 to Mn consider that transmission rest time T5 is detected, and transition to a continuous reception operation 114 for receiving SDN-UD2 signal 116 to be transmitted next time.

The above-described operation will be further described with reference to Fig. 1. At point of time Ta, wireless slave devices M1 to Mn start intermittent control unit 103 by the signal from control unit 108. Intermittent control unit 103 intermittently turns on the power of selection amplifier 102 and carrier sensor unit 104 at cycle T1 to perform the carrier sensing operation.

The carrier sensing operation refers to an operation of detecting whether a received signal level is a predetermined signal level or higher. A period of time when the power is turned on for the carrier sensing operation is 10 milliseconds or shorter. First determining unit 106 determines whether SND-UD1 signal 115 is detected. A determination method may be performed according to whether the carrier is continuously detected by a predetermined number of times at cycle T1, or may be performed according to whether the carrier is detected two times during a period of time of (3×T1), for example.

In the example of Fig. 7, if the carrier is detected even once, it is determined that SND-UD1 signal 115 is detected. If it is determined that SND-UD1 signal 115 is detected by first determining unit 106, control unit 108 instructs intermittent control unit 103 to change the intermittent cycle from T1 to T2. Further, second determining unit 107 determines the presence or absence of transmission rest time T5. A method for determining the presence or absence of transmission rest time T5 may be performed according to whether the carrier cannot be detected a predetermined number of times in succession at cycle T2, or may be performed according to whether the carrier cannot be detected two times during a period of time of (3×T2), for example.

If second determining unit 107 determines that the carrier is absent, that is, transmission rest time T5 is present, control unit 108 instructs intermittent control unit 103 to constantly turn on the power of selection amplifier 102, starts signal receiving unit 105, and causes periodic notification apparatus 100 to transition to a state where SND-UD2 signal 116 can be received.

First determining unit 106 and second determining unit 107 have time-out functions, respectively. When a predetermined time elapses after the respective determining units start, the determining units notify control unit 108 of the lapse of time. Further, control unit 108 stops the carrier sensing operation, and turns off the entire power of periodic notification apparatus 100 to return to a standby state.

Further, when a predetermined time elapses after the transmission rest time is detected by second determining unit 107, and when signal receiving unit 105 cannot receive a frame packet shown in Fig. 3, control unit 108 similarly turns off the entire power of periodic notification apparatus 100 to return to the standby state.

Through the above-described operation, wireless slave devices M1 to Mn can receive SND-UDn telegrams of SND-UD2 signal 116 and thereafter, can decode the firmware rewriting data. On the other hand, wireless slave devices M1 to Mn cannot receive and decode SND-UD1 signal 115. Thus, meaningless dummy data may be carried in SND-UD1 signal 115, and signals obtained by dividing each firmware rewriting data into 200 bytes may be carried in SND-UD2 signal 116 and thereafter to be sequentially transmitted.

The same data may be transmitted by SND-UD1 signal 115 and SND-UD2 signal 116. Further, the firmware rewriting data included in SND-UD1 signal 115 may be transmitted again from wireless master device C after the SND-NR transmitted in wireless slave devices M1 to Mn in zone A, B, and C.

As described above, in the present embodiment, the information on reception timing B when each wireless slave device starts the reception is transmitted by the SND-UD signal from wireless master device C shown in Fig. 5, and the wireless slave device that receives reception timing B starts the reception at reception timing B in zone D. Further, the wireless slave device to which the SND-UD is not transmitted from wireless master device C does not perform the reception in zone D. However, the invention is not limited thereto, and the information on reception timing B may not be carried in SND-UD. When the information on reception timing B is not carried in SND-UD, the information on reception timing B may be written in each wireless slave device in advance, for example, when the wireless slave device is provided.

Further, each wireless slave device may perform the reception operation at reception timing B in zone D that is stored in advance, regardless of the presence or absence of the SND-UD signal reception.

As described above, signal collecting apparatus 200 of the present embodiment performs wireless communication with the periodic signal transmitting apparatus (periodic notification apparatus 100) to which the predetermined period including the period for transmission and reception of the periodic signal that is periodically generated and the period for transmission and reception of the non-periodic signal that is non-periodically generated is repeatedly allocated. Further, signal collecting apparatus 200 includes receiving unit 203 that receives the periodic signal from the periodic signal transmitting apparatus within the period for transmission and reception of the periodic signal, and transmitting unit 201 that transmits the time point information to the periodic signal transmitting apparatus that transmits the periodic signal when transmitting the non-periodic signal to the periodic signal transmitting apparatus.

Further, the point of time indicated by the time point information is within a range of the period for transmission and reception of the non-periodic signal.

In addition, the periodic signal may include at least one of meter reading data acquired from a measuring device provided in the periodic signal transmitting apparatus and abnormality notification data indicating the presence or absence of an abnormality relating to the measuring device.

Furthermore, the non-periodic signal may be update data for updating the firmware relating to the periodic signal transmitting apparatus.

Further, transmitting unit 201 may broadcast the non-periodic signal to the periodic signal transmitting apparatus after a predetermined time elapses from the point of time designated by the time point information.

Then, the periodic signal transmitting apparatus (periodic notification apparatus 100) of the present embodiment is a periodic signal transmitting apparatus to which the predetermined period including the period for transmission and reception of the periodic signal that is periodically generated and the period for transmission and reception of the non-periodic signal that is non-periodically generated is repeatedly allocated. Further, the periodic signal transmitting apparatus includes transmitting unit 109 that transmits the periodic signal to signal collecting apparatus 200 within the period for transmission and reception of the periodic signal, and signal receiving unit 105 that is a receiving unit that receives the time point information from the signal collecting apparatus that receives the periodic signal. Further, the point of time indicated by the time point information is within a range of the period for transmission and reception of the non-periodic signal, and the receiving unit starts the operation of receiving the non-periodic signal from signal collecting apparatus 200 at the point of time based on the time point information.

In addition, the signal collecting system of the present embodiment includes the above-described signal collecting apparatus 200 and one or plural periodic notification apparatuses 100.

With such a configuration, the wireless slave device (corresponding to the periodic signal transmitting apparatus or periodic notification apparatus 100) can provide a section where there is no call from the wireless slave device with a simple configuration without noticeable influence on the meter reading data transmission interval.

In addition, the wireless slave unit can receive the large amount of data from the wireless master device (corresponding to signal collecting apparatus 200) with a simple configuration without noticeable influence on the meter reading data transmission interval.

In addition, since it is sufficient if signal receiving unit 105 is started only when the reception of the large amount of data from the wireless master device is necessary, it is possible reduce power consumption of the wireless slave device. Thus, wireless master device can designate the same timing B with respect to all the wireless slave devices, to thereby enable the broadcasting at the same time.

In addition, it is possible to provide a signal collecting system in which wireless master device can broadcast the large amount of data such as firmware to the respective wireless slave devices at the same time without noticeable influence on the number of wireless slaves that can be accommodated and the meter reading data transmission interval of the wireless slave devices.

In addition, the periodic signal transmitting apparatus (periodic notification apparatus 100) performs wireless communication with signal collecting apparatus 200 that transmits a second signal when a predetermined time elapses after transmission of a first signal is finished. Further, the periodic signal transmitting apparatus includes carrier sensor unit 104 that intermittently performs the carrier sensing operation of capturing a reception level of the signal transmitted from signal collecting apparatus 200 to detect the presence or absence of the signal according to the reception level of the signal, and signal receiving unit 105 that is a receiving unit that starts a reception operation of receiving the second signal when the presence of the first signal cannot be detected in the carrier sensing operation performed a predetermined number of times after carrier sensor unit 104 detects the presence of the first signal.

Further, the periodic signal transmitting apparatus further includes intermittent control unit 103 that controls an intermittent interval of the carrier sensing operation performed by carrier sensor unit 104. In addition, when carrier sensor unit 104 detects the presence of the first signal, intermittent control unit 103 changes the intermittent interval of the carrier sensing operation from T1 into T2 according to period T5 from the time when the transmission of the first signal is finished to the time when the second signal is transmitted. More specifically, when carrier sensor unit 104 detects the presence of the first signal, intermittent control unit 103 changes the intermittent interval of the carrier sensing operation into a time interval shorter than a transmission rest period from the time when the transmission of the first signal is finished to the time when the second signal is transmitted.

Further, when the first signal cannot be detected in a predetermined time, carrier sensor unit 104 stops the carrier sensing operation to transition to a standby state.

In addition, when the first signal is continuously detected or is detected a predetermined number of times or more in a predetermined time, carrier sensor unit 104 determines that the first signal is detected.

Furthermore, when the second signal cannot be detected in a predetermined time, carrier sensor unit 104 stops the carrier sensing operation to transition to the standby state.

Further, the signal collecting system of the present embodiment is a signal collecting system that includes signal collecting apparatus 200 and the periodic signal transmitting apparatus that performs wireless communication with signal collecting apparatus 200. Further, signal collecting apparatus 200 includes transmitting unit 201 that transmits, when a predetermined time elapses after transmission of the first signal is finished, the second signal. The periodic signal transmitting apparatus includes carrier sensor unit 104 that intermittently performs the carrier sensing operation of capturing the reception level of the signal transmitted from signal collecting apparatus 200 to detect the presence or absence of the signal according to the reception level of the signal, and receiving unit 203 that starts the reception operation of receiving the second signal when the presence of the first signal cannot be detected in the carrier sensing operation performed a predetermined number of times after carrier sensor unit 104 detects the presence of the first signal.

With this configuration, it is possible to provide a system in which the wireless slave device can receive the large amount of data from the wireless master device with a simple configuration without noticeable change of the OMS protocol while preventing an increase of power consumption.

As described above, according to the invention, it is possible to achieve an excellent effect capable of receiving the large amount of data from the wireless master device by the wireless slave device without noticeable reduction of the number of the wireless slave devices and without an increase of the calling interval of the meter reading data, and thus, the system of the invention is useful, for example, as a wireless communication system such as an automatic gas meter reading system that employs the OMS protocol operated on the wireless M-bus network that is an international standard.

## Claims

1. A signal collecting apparatus (200) for performing wireless communication with a periodic signal transmitting apparatus (100) to which a predetermined period including a period for transmission and reception of a periodic signal that is periodically generated and a period for transmission and reception of a non-periodic signal that is non-periodically generated is repeatedly allocated, comprising:
a receiving unit (203) for receiving the periodic signal from the periodic signal transmitting apparatus (100) in the period for transmission and reception of the periodic signal; and
a transmitting unit (201),
**characterized in that**:
the transmissing unit (201) is configured to transmit, when the non-periodic signal is transmitted to the periodic signal transmitting apparatus (100), time point information to the periodic signal transmitting apparatus (100) to which the periodic signal is transmitted,
wherein a point of time indicated by the time point information is present within a range of the period for transmission and reception of the non-periodic signal.

2. The signal collecting apparatus (200) of claim 1,
wherein the periodic signal includes at least one of meter reading data acquired from a measuring device provided in the periodic signal transmitting apparatus (100) and abnormality notification data indicating the presence or absence of an abnormality relating to the measuring device.

3. The signal collecting apparatus (200) of claim 2,
wherein the non-periodic signal is update data for updating firmware relating to the periodic signal transmitting apparatus (100).

4. The signal collecting apparatus (200) of claim 3,
wherein the transmitting unit (201) is configured to broadcast the non-periodic signal to the periodic signal transmitting apparatus (100) when a predetermined time elapses after the point of time designated by the time point information.

5. A periodic signal transmitting apparatus (100) to which a predetermined period including a period for transmission and reception of a periodic signal that is periodically generated and a period for transmission and reception of a non-periodic signal that is non-periodically generated is repeatedly allocated, comprising:
a transmitting unit (109) for transmitting the periodic signal to a signal collecting apparatus (200) in the period for transmission and reception of the periodic signal; and
a receiving unit (105),
**characterized in that**:
the receiving unit (105) is configured to receive, immediately after the periodic signal is transmitted, time point information from the signal collecting apparatus (200) in which the periodic signal is received,
wherein a point of time indicated by the time point information is present within a range of the period for transmission and reception of the non-periodic signal, and
wherein the receiving unit (105) is configured to start an operation of receiving the non-periodic signal from the signal collecting apparatus (200) at the point of time based on the time point information.

6. The periodic signal transmitting apparatus (100) of claim 5,
wherein the signal collecting apparatus is configured to transmit (200), when a predetermined time elapses after transmission of a first signal is finished, a second signal, the periodic signal transmitting apparatus (100) further comprising:
a carrier sensor unit (104) that intermittently performs a carrier sensing operation of capturing a reception level of a signal transmitted from the signal collecting apparatus (200) to detect the presence or absence of the signal according to the reception level of the signal; and
a receiving unit (105) for starting a reception operation of receiving the second signal when the presence of the first signal cannot be detected in the carrier sensing operation performed a predetermined number of times after the carrier sensor unit (104) detects the presence of the first signal.

7. The periodic signal transmitting apparatus (100) of claim 6, further comprising:
an intermittent control unit (108) for controlling an intermittent interval of the carrier sensing operation performed by the carrier sensor unit (104),
wherein the intermittent control unit (108) is configured to change the intermittent interval of the carrier sensing operation into a time interval shorter than a transmission stop period from the time when the transmission of the first signal is finished to the time when the second signal is transmitted when the carrier sensor unit (104) detects the presence of the first signal.

8. The periodic signal transmitting apparatus (100) of claim 7,
wherein the carrier sensor unit (104) is configured to stop the carrier sensing operation to transition to a standby state when the first signal cannot be detected in a predetermined time.

9. The periodic signal transmitting apparatus (100) of claim 7,
wherein the carrier sensor unit (104) is configured to determine that the first signal is detected when the first signal is continuously detected or is detected a predetermined number of times or more in the predetermined time.

10. The periodic signal transmitting apparatus (100) of claim 7,
wherein the carrier sensor unit (104) stops the carrier sensing operation to transition to the standby state when the second signal cannot be detected in the predetermined time.

11. A signal collecting system to which a predetermined period including a period for transmission and reception of a periodic signal that is periodically generated and a period for transmission and reception of a non-periodic signal that is non-periodically generated is repeatedly allocated and which performs wireless communication between the signal collecting apparatus (200) of claim 1 and the periodic signal transmitting apparatus (100) of claim 5.

12. The signal collecting system of claim 11 further comprising:
a periodic signal transmitting apparatus (100) for performing wireless communication with the signal collecting apparatus (200),
wherein the signal collecting apparatus (200) includes a transmitting unit (201) for transmitting, when a predetermined time elapses after transmission of a first signal is finished, a second signal, and
wherein the periodic signal transmitting apparatus (100) includes
a carrier sensor unit (104) that intermittently performs a carrier sensing operation of capturing a reception level of a signal transmitted from the signal collecting apparatus (200) to detect the presence or absence of the signal according to the reception level of the signal, and
a receiving unit (105) for starting a reception operation of receiving the second signal when the presence of the first signal cannot be detected in the carrier sensing operation performed a predetermined number of times after the carrier sensor unit (104) detects the presence of the first signal.

## Patentansprüche

1. Signalsammelvorrichtung (200) zum Durchführen einer drahtlosen Kommunikation mit einer Sendevorrichtung (100) für periodisches Signal, der eine vorgegebene Periode mit einer Periode zum Senden und Empfangen eines periodischen Signals, das periodisch erzeugt wird, und einer Periode zum Senden und Empfangen eines nicht periodischen Signals, das nicht periodisch erzeugt wird, wiederholt zugewiesen wird, die umfasst:
eine Empfangseinheit (203) zum Empfangen des periodischen Signals von der Sendevorrichtung (100) für periodisches Signal in der Periode zum Senden und Empfangen des periodischen Signals und
eine Sendeeinheit (201),
**dadurch gekennzeichnet, dass**
die Sendeeinheit (201) konfiguriert ist, um, wenn das nicht periodische Signal zur Sendevorrichtung (100) für periodisches Signal gesendet wird, Zeitpunktinformationen zur Sendevorrichtung (100) für periodisches Signal zu senden, an die das periodische Signal gesendet wird,
wobei ein durch die Zeitpunktinformationen angezeigter Zeitpunkt in einem Bereich der Periode zum Senden und Empfangen des nicht periodischen Signals vorhanden ist.

2. Signalsammelvorrichtung (200) nach Anspruch 1,
wobei das periodische Signal wenigstens Zählerstandsdaten, die von einer in der Sendevorrichtung (100) für periodisches Signal bereitgestellten Messvorrichtung erfasst werden, oder Abnormalitätsbenachrichtigungsdaten aufweist, die das Vorhandensein oder Nichtvorhandensein einer Abnormalität bezüglich der Messvorrichtung anzeigen.

3. Signalsammelvorrichtung (200) nach Anspruch 2,
wobei das nicht periodische Signal Aktualisierungsdaten zum Aktualisieren von Firmware bezüglich der Sendevorrichtung (100) für periodisches Signal ist.

4. Signalsammelvorrichtung (200) nach Anspruch 3,
wobei die Sendeeinheit (201) konfiguriert ist, um das nicht periodische Signal zur Sendevorrichtung (100) für periodisches Signal auszustrahlen, wenn eine vorgegebene Zeit nach dem durch die Zeitpunktinformationen bestimmten Zeitpunkt abläuft.

5. Sendevorrichtung (100) für periodisches Signal, der eine vorgegebene Periode mit einer Periode zum Senden und Empfangen eines periodischen Signals, das periodisch erzeugt wird, und einer Periode zum Senden und Empfangen eines nicht periodischen Signals, das nicht periodisch erzeugt wird, wiederholt zugewiesen wird, die umfasst:
eine Sendeeinheit (109) zum Senden des periodischen Signals an eine Signalsammelvorrichtung (200) in der Periode zum Senden und Empfangen des periodischen Signals und
eine Empfangseinheit (105),
**dadurch gekennzeichnet, dass**
die Empfangseinheit (105) konfiguriert ist, um, unmittelbar nachdem das periodische Signal gesendet wird, Zeitpunktinformationen von der Signalsammelvorrichtung (200) zu empfangen, in der das periodische Signal empfangen wird,
wobei ein durch die Zeitpunktinformationen angezeigter Zeitpunkt in einem Bereich der Periode zum Senden und Empfangen des nicht periodischen Signals vorhanden ist, und
wobei die Empfangseinheit (105) konfiguriert ist, um einen Vorgang zum Empfangen des nicht periodischen Signals von der Signalsammelvorrichtung (200) zu dem Zeitpunkt auf der Basis der Zeitpunktinformationen zu beginnen.

6. Sendevorrichtung (100) für periodisches Signal nach Anspruch 5,
wobei die Signalsammelvorrichtung (200) konfiguriert ist, um, wenn eine vorgegebene Zeit abläuft, nachdem das Senden eines ersten Signals beendet ist, ein zweites Signal zu senden,
wobei die Sendevorrichtung (100) für periodisches Signal des Weiteren umfasst:
eine Trägersensoreinheit (105), die intermittierend einen Trägererfassungsvorgang zum Festhalten eines Empfangspegels eines von der Signalsammelvorrichtung (200) gesendeten Signals durchführt, um das Vorhandensein oder Nichtvorhandensein des Signals entsprechend dem Empfangspegel des Signals zu erfassen; und
eine Empfangseinheit (105) zum Beginnen eines Empfangsvorgangs zum Empfangen des zweiten Signals, wenn das Vorhandensein des ersten Signals beim Trägererfassungsvorgang nicht erfasst werden kann, der eine vorgegebene Anzahl von Malen durchgeführt wird, nachdem die Trägersensoreinheit (104) das Vorhandensein des ersten Signals erfasst.

7. Sendevorrichtung (100) für periodisches Signal nach Anspruch 6, die des Weiteren umfasst:
eine intermittierende Steuereinheit (108) zum Steuern eines intermittierenden Intervalls des von der Trägersensoreinheit (104) durchgeführten Trägererfassungsvorgangs,
wobei die intermittierende Steuereinheit (108) konfiguriert ist, um das intermittierende Intervall des Trägererfassungsvorgangs in ein Zeitintervall zu ändern, das kürzer ist als eine Sendeanhalteperiode von dem Zeitpunkt, zu dem das Senden des ersten Signals beendet ist, bis zu dem Zeitpunkt, wenn das zweite Signal gesendet wird, wenn die Trägersensoreinheit (104) das Vorhandensein des ersten Signals erfasst.

8. Sendevorrichtung (100) für periodisches Signal nach Anspruch 7,
wobei die Trägersensoreinheit (104) konfiguriert ist, um den Trägererfassungsvorgang anzuhalten, um in einen Bereitschaftsstatus überzugehen, wenn das erste Signal in einer vorgegebenen Zeit nicht erfasst werden kann.

9. Sendevorrichtung (100) für periodisches Signal nach Anspruch 7,
wobei die Trägersensoreinheit (104) konfiguriert ist, um zu bestimmen, dass das erste Signal erfasst ist, wenn das erste Signal kontinuierlich erfasst wird oder eine vorgegebene Anzahl von Malen oder mehr in der vorgegebenen Zeit erfasst wird.

10. Sendevorrichtung (100) für periodisches Signal nach Anspruch 7,
wobei die Trägersensoreinheit (104) den Trägererfassungsvorgang anhält, um in den Bereitschaftsstatus überzugehen, wenn das zweite Signal in der vorgegebenen Zeit nicht erfasst werden kann.

11. Signalsammelsystem, dem eine vorgegebene Periode mit einer Periode zum Senden und Empfangen eines periodischen Signals, das periodisch erzeugt wird, und einer Periode zum Senden und Empfangen eines nicht periodischen Signals, das nicht periodisch erzeugt wird, wiederholt zugewiesen wird und das eine drahtlose Kommunikation zwischen der Signalsammelvorrichtung (200) nach Anspruch 1 und der Sendevorrichtung (100) für periodisches Signal nach Anspruch 5 durchführt.

12. Signalsammelsystem nach Anspruch 11, das des Weiteren umfasst:
eine Sendevorrichtung (100) für periodisches Signal zum Durchführen einer drahtlosen Kommunikation mit der Signalsammelvorrichtung (200),
wobei die Signalsammelvorrichtung (200) eine Sendeeinheit (201) zum Senden eines zweiten Signals umfasst, wenn eine vorgegebene Zeit abläuft, nachdem das Senden eines ersten Signals beendet ist, und
wobei die Sendevorrichtung (100) für periodisches Signal eine Trägersensoreinheit (104) aufweist, die intermittierend einen Trägererfassungsvorgang zum Festhalten eines Empfangspegels eines von der Signalsammelvorrichtung (200) gesendeten Signals durchführt, um das Vorhandensein oder Nichtvorhandensein des Signals entsprechend dem Empfangspegel des Signals zu erfassen, und
eine Empfangseinheit (105) zum Beginnen eines Empfangsvorgangs zum Empfangen des zweiten Signals, wenn das Vorhandensein des ersten Signals beim Trägererfassungsvorgang nicht erfasst werden kann, das eine vorgegebene Anzahl von Malen durchgeführt wird, nachdem die Trägersensoreinheit (104) das Vorhandensein des ersten Signals erfasst.

## Revendications

1. Appareil de collecte de signal (200) destiné à effectuer une communication sans fil avec un appareil de transmission de signal périodique (100) auquel une période prédéterminée comprenant une période de transmission et de réception d'un signal périodique qui est périodiquement généré et une période de transmission et de réception d'un signal non périodique qui est généré de manière non périodique est affectée de manière répétée, comprenant :
une unité de réception (203) destinée à recevoir le signal périodique depuis l'appareil de transmission de signal périodique (100) dans la période de transmission et réception du signal périodique ; et
une unité de transmission (201),
**caractérisé en ce que** :
l'unité de transmission (201) est conçue pour transmettre, lorsque le signal non périodique est transmis à l'appareil de transmission de signal périodique (100), des informations de point temporel à l'appareil de transmission de signal périodique (100) auquel le signal périodique est transmis,
un point temporel indiqué par les informations de point temporel étant présent dans une plage de la période de transmission et réception du signal non périodique.

2. Appareil de collecte de signal (200) selon la revendication 1,
dans lequel le signal périodique comprend des données de lecture de compteur acquises depuis un dispositif de mesure disposé dans l'appareil de transmission de signal périodique (100) et/ou des données de notification d'anomalie indiquant la présence ou l'absence d'une anomalie relative au dispositif de mesure.

3. Appareil de collecte de signal (200) selon la revendication 2,
dans lequel le signal non périodique représente des données de mise à jour destinées à mettre à jour un micro logiciel relatif à l'appareil de transmission de signal périodique (100).

4. Appareil de collecte de signal (200) selon la revendication 3,
dans lequel l'unité de transmission (201) est conçue pour diffuser le signal non périodique vers l'appareil de transmission de signal périodique (100) lorsqu'un temps prédéterminé s'est écoulé après le point temporel désigné par les informations de point temporel.

5. Appareil de transmission de signal périodique (100) auquel une période prédéterminée comprenant une période de transmission et réception d'un signal périodique qui est périodiquement généré et une période de transmission et réception d'un signal non périodique qui est généré de manière non périodique est affectée de manière répétée, comprenant :
une unité de transmission (109) destinée à transmettre le signal périodique à un appareil de collecte de signal (200) dans la période de transmission et réception du signal périodique ; et
une unité de réception (105),
**caractérisé en ce que** :
l'unité de réception (105) est conçue pour recevoir, immédiatement après que le signal périodique a été transmis, des informations de point temporel depuis l'appareil de collecte de signal (200) dans lequel le signal périodique est reçu,
un point temporel indiqué par les informations de point temporel étant présent dans une plage de la période de transmission et réception du signal non périodique, et
l'unité de réception (105) étant conçue pour démarrer une opération de réception du signal non périodique provenant de l'appareil de collecte de signal (200) au point temporel en fonction des informations de point temporel.

6. Appareil de transmission de signal périodique (100) selon la revendication 5, dans lequel l'appareil de collecte de signal est conçu pour transmettre (200), lorsqu'un temps prédéterminé s'est écoulé après la fin de la transmission d'un premier signal, un deuxième signal,
l'appareil de transmission de signal périodique (100) comprenant en outre :
une unité de capteur de support (104) qui effectue par intermittence une opération de détection de support consistant à capturer un niveau de réception d'un signal transmis depuis l'appareil de collecte de signal (200) pour détecter la présence ou l'absence du signal en fonction du niveau de réception du signal ; et
une unité de réception (105) destinée à démarrer une opération de réception consistant à recevoir le deuxième signal lorsque la présence du premier signal ne peut pas être détectée dans l'opération de détection de support effectuée un nombre prédéterminé de fois après que l'unité de capteur de support (104) a détecté la présence du premier signal.

7. Appareil de transmission de signal périodique (100) selon la revendication 6, comprenant en outre :
une unité de commande intermittente (108) destinée à commander un intervalle intermittent de l'opération de détection de support effectuée par l'unité de capteur de support (104),
l'unité de commande intermittente (108) étant conçue pour modifier l'intervalle intermittent de l'opération de détection de support en un intervalle de temps plus court qu'une période d'arrêt de transmission depuis le moment où la transmission du premier signal est finie jusqu'au moment où le deuxième signal est transmis lorsque l'unité de capteur de support (104) détecte la présence du premier signal.

8. Appareil de transmission de signal périodique (100) selon la revendication 7,
dans lequel l'unité de capteur de support (104) est conçue pour arrêter l'opération de détection de support pour passer à un état d'attente lorsque le premier signal ne peut pas être détecté dans un temps prédéterminé.

9. Appareil de transmission de signal périodique (100) selon la revendication 7,
dans lequel l'unité de capteur de support (104) est conçue pour déterminer que le premier signal est détecté lorsque le premier signal est détecté en continu ou est détecté un nombre prédéterminé de fois ou plus dans le temps prédéterminé.

10. Appareil de transmission de signal périodique (100) selon la revendication 7,
dans lequel l'unité de capteur de support (104) arrête l'opération de détection de support pour passer à l'état d'attente lorsque le deuxième signal ne peut pas être détecté dans le temps prédéterminé.

11. Système de collecte de signal auquel une période prédéterminée comprenant une période de transmission et réception d'un signal périodique qui est généré périodiquement et une période de transmission et réception d'un signal non périodique qui est généré de manière non périodique est affectée de manière répétée et qui effectue une communication sans fil entre l'appareil de collecte de signal (200) selon la revendication 1 et l'appareil de transmission de signal périodique (100) selon la revendication 5.

12. Système de collecte de signal selon la revendication 11, comprenant en outre :
un appareil de transmission de signal périodique (100) destiné à effectuer une communication sans fil avec l'appareil de collecte de signal (200),
l'appareil de collecte de signal (200) comprenant
une unité de transmission (201) destinée à transmettre, lorsqu'un temps prédéterminé s'est écoulé après la fin de la transmission d'un premier signal, un deuxième signal, et
l'appareil de transmission de signal périodique (100) comprenant
une unité de capteur de support (104) qui effectue par intermittence une opération de détection de support consistant à capturer un niveau de réception d'un signal transmis depuis l'appareil de collecte de signal (200) pour détecter la présence ou l'absence du signal en fonction du niveau de réception du signal, et
une unité de réception (105) destinée à démarrer une opération de réception consistant à recevoir le deuxième signal lorsque la présence du premier signal ne peut pas être détectée dans l'opération de détection de support effectuée un nombre prédéterminé de fois après que l'unité de capteur de support (104) a détecté la présence du premier signal.
